# EUROPEAN PATENT APPLICATION

(11) **EP 4 729 871 A1**
(43) Date of publication of application: **22.04.2026**
(21) Application number: 24861340.8
(22) Date of filing: 05.07.2024
(51) Int. Cl.: F28D 21/00, F28F 27/00, F22B 3/00

(54) **METHOD AND SYSTEM FOR TREATING PROCESS FLUID**

(30) Priority: 22.12.2023 KR 20230189475
(71) Applicant: LG Chem, Ltd., Seoul 07336 (KR)
(72) Inventor: HWANG, Sung June, Daejeon 34122 (KR); AHN, Hyun Soo, Daejeon 34122 (KR); LEE, Sung Kyu, Daejeon 34122 (KR); JANG, Kyung Soo, Daejeon 34122 (KR)
(74) Representative: Goddar, Heinz J.
(86) International application number: PCT/KR2024/009534
(87) International publication number: WO 2025/135349

(57) **Abstract**

Provided are method and system for treating a process fluid, and more particularly, method and system for treating a process fluid that may improve operation stability by introducing a condenser designed to respond to a phase of a process fluid, which is changed based on whether steam is generated for recovering waste heat in a process of recovering the waste heat from the process fluid.

## Description

### [Technical Field]

### CROSS-REFERENCE TO RELATED APPLICATION(S)

This application claims benefit of and priority to Korean Patent Application No. 10-2023-0189475 filed on December 22, 2023 in the Korean Intellectual Property Office, the disclosures of which are incorporated herein by reference in their entireties.

### Technical Field

The present disclosure relates to method and system for treating a process fluid, and more particularly, to method and system for treating a process fluid that may improve operation stability by introducing a condenser designed to respond to a phase of a process fluid, which is changed based on whether steam is generated for recovering waste heat in a process of recovering the waste heat from the process fluid.

### [Background Art]

A lot of energy may be used for producing a product in a petrochemical process, and used energy herein may be discarded or reused. In general, steam, which is used as an energy source in the petrochemical process, may be generated by combustion heat of a hydrocarbon fuel using a boiler. However, this process may involve a high cost, and the supplied fuel may be discharged into the atmosphere in the form of carbon dioxide through combustion, thus causing global warming. Accordingly, in order to reduce carbon emissions and lower a manufacturing cost of the petrochemical product, usage of waste heat is emerging as a way to reduce an amount of steam used in the process.

Typically, the petrochemical product may be manufactured through processes that include reaction, separation, and purification. When the bottom of a column, where the processes are performed, is heated using steam, a high-temperature process fluid may be generated at the top of the column. The high-temperature fluid may become the waste heat, a large amount of heat may be discarded as the fluid is cooled through its heat exchange with cooling water in a heat exchanger such as a condenser or a cooler. Here, the heated cooling water may flow into a cooling tower, may be cooled while dissipating heat, and may then be supplied to the heat exchanger again. Heat dissipated in this cooling process may be referred to as the waste heat in the process.

Accordingly, in order to use the waste heat in the process, boiler feed water may be heat-exchanged with the high-temperature process fluid to thus generate and use steam. Meanwhile, the process fluid, from which the waste heat is recovered, may be recycled back to the column through the series of processes, or input into a subsequent process (for example, the reaction process or the purification process).

In detail, the high-temperature process fluid discharged to the top of the column may be converted to a two-phase vapor-liquid stream due to its heat exchange with boiler feed water during the steam generation, this stream may be condensed by the heat exchanger such as the condenser, and then refluxed into the column. However, during the process, the steam generation may be stopped due to a failure of a steam generation system for recovering the waste heat that includes an evaporator disposed at the front of the condenser. In this case, a condition such as the phase change or amount of heat of a process fluid stream input to the condenser may be changed, thus significantly increasing a stability risk of the condenser.

### [Disclosure]

### [Technical Problem]

An object of the present disclosure is to provide method and system for treating a process fluid that may improve process stability by separating and discharging a process fluid stream discharged from an evaporator based on its phase in a process of recovering waste heat from a high-temperature process fluid generated in a petrochemical process, and introducing a condenser designed to respond to a phase of the process fluid, which is changed based on whether steam is generated for recovering the waste heat.

However, technical tasks of the present disclosure are not limited to those mentioned above, and other tasks not mentioned here may be obviously understood by those skilled in the art from the following description.

### [Technical Solution]

In one general aspect, the present disclosure provides a method for treating a process fluid, the method including: supplying a gaseous process fluid stream from waste heat to an evaporator, converting the process fluid stream to a two-phase process fluid through heat exchange, and separating and discharging the two-phase process fluid stream into each of a gaseous first process fluid stream and a liquid second process fluid stream from the rear of the evaporator; supplying the gaseous first process fluid stream to one region of a condenser whose front-end head includes a partition to divide its interior into two regions, and supplying the liquid second process fluid stream to the other region of the condenser; and condensing the gaseous first process fluid stream and cooling the liquid second process fluid stream through the heat exchange in the condenser.

In one general aspect, the present disclosure provides a system for treating a process fluid, the system including: an evaporator that generates steam by using a gaseous process fluid stream supplied from waste heat as a heat source; a first line connected to the top rear of the evaporator and transporting a gaseous first process fluid stream discharged from the evaporator; a second line connected to the bottom rear of the evaporator and transporting a liquid second process fluid stream discharged from the evaporator; a condenser connected to the first and second lines and performing heat exchange between the gaseous first process fluid stream and the liquid second process fluid stream, which are supplied from the evaporator, and cooling water; and the condenser drum connected to the condenser, and collecting the heat-exchanged first and second process fluid streams.

A partition may be disposed at a front-end head of the condenser to thus divide its interior into two regions, one region in the front-end head of the condenser may be connected to the first line, thus enabling the gaseous first process fluid stream supplied from the evaporator to be condensed through the heat exchange, and the other region in the front-end head of the condenser may be connected to the second line, thus enabling the liquid second process fluid stream supplied from the evaporator to be cooled through the heat exchange.

### [Advantageous Effects]

The method and system for treating a process fluid according to the present disclosure may secure the excellent process stability in the petrochemical process performed by the system for recovering the waste heat by generating steam through the heat exchange with the high-temperature process fluid, which is the waste heat, regardless of the condition such as the phase change or amount of heat of the process fluid stream, which is significantly changed based on whether steam is generated.

In detail, the method and system according to the present disclosure may improve the process stability by separating the two-phase process fluid stream discharged from the evaporator during the steam generation respectively into the gaseous stream and the liquid stream during the steam generation, and treating these streams by inputting the same respectively into the two separate regions of the condenser whose front-end head includes the partition.

In addition, the method and system for treating a process fluid according to the present disclosure may improve the process stability by using the condenser whose front-end head includes the partition to thus respond to the phase change and amount of heat of the process fluid stream, which is significantly changed based on whether steam is generated using only one condenser.

Advantageous effects of the present disclosure are not limited to those mentioned above, and other effects not mentioned here may be obviously understood by those skilled in the art from the description provided below.

### [Description of Drawings]

FIG. 1 is a schematic diagram of a process of treating a process fluid according to an embodiment of the present disclosure.
FIG. 2 is a schematic diagram of a process of treating a process fluid according to Comparative Example 1.
FIG. 3 is a schematic diagram of a process of treating a process fluid according to Comparative Example 2.

### [Best Mode]

Terms and words used in the descriptions and claims of the present disclosure are not to be construed as a general or dictionary meaning but are to be construed as meaning and concepts meeting the spirit of the present disclosure based on a principle that the inventors may appropriately define the concepts of terms in order to describe their own inventions in the best mode.

Throughout the accompanying drawings, similar components are denoted by similar reference numerals.

A singular noun corresponding to an item is intended to include one or more of the items, unless a relevant context clearly indicates otherwise.

In the present disclosure, an expression "A or B", "at least one of A and B", "at least one of A or B", "A, B, or C", "at least one of A, B, and C", "at least one of A, B, or C", or the like may include any one of the items enumerated together or all possible combinations thereof.

A term "and/or" includes a combination of a plurality of related items or any one of the plurality of related items.

Terms such as "first", "second", or the like may be used simply to distinguish one element and another element from each other, and do not limit the corresponding components in any other respect (e.g., importance or order).

In addition, terms such as "front surface", "rear surface", "upper surface", "lower surface", "side surface", "left side", "right side", "upper part", "lower part", "region", and the like used in the present disclosure are defined based on the drawings. The shapes and positions of respective components are not limited to these terms.

Terms "include", "have", or the like used in the specification specify the presence of features, numerals, steps, operations, components, parts, or combinations thereof, mentioned in the specification, and do not preclude the presence or addition of one or more other features, numerals, steps, operations, components, parts, or combinations thereof.

When a component is referred to as being "connected", "coupled", "supported", or "in contact" with another component, it includes not only a case where the components are directly connected, coupled, supported, or in contact with each other, but also a case where the components are indirectly connected, coupled, supported, or in contact with each other through a third component.

In case that a component is referred to be disposed "on" another component, it includes not only a case where the component is in contact with another component, but also a case where the third component exists between the two components.

In addition, as used throughout the specification, a term of degree "about", "substantially", or the like is used to indicate the number of a stated meaning or its approximation when its manufacturing or material tolerance inherent therein is given. Such a term is used to prevent unscrupulous infringers from unfairly using the present disclosure in which exact or absolute figures are stated to facilitate the understanding of this application.

A term "stream" used herein may refer to a flow of a fluid in a process, and may refer to the fluid itself flowing in a pipe. In detail, the stream may refer to both the fluid itself and the flow of the fluid flowing in the pipe connecting devices to each other. In addition, the fluid may include one or more components among a gas, a liquid, and a solid.

A term "upper portion," as used herein, unless otherwise specified, refers to a point at a height of 0% to 20% from the uppermost portion of the device to the lower position, and may specifically refer to the uppermost portion (the top of the column). In addition, a term "lower portion" refers to a point at a height of 80% to 100% from the uppermost portion of the device to a lower position, and may specifically refer to the lowermost portion (the bottom of the column).

In addition, a "pressure" used herein may refer to gauge pressure measured based on atmospheric pressure.

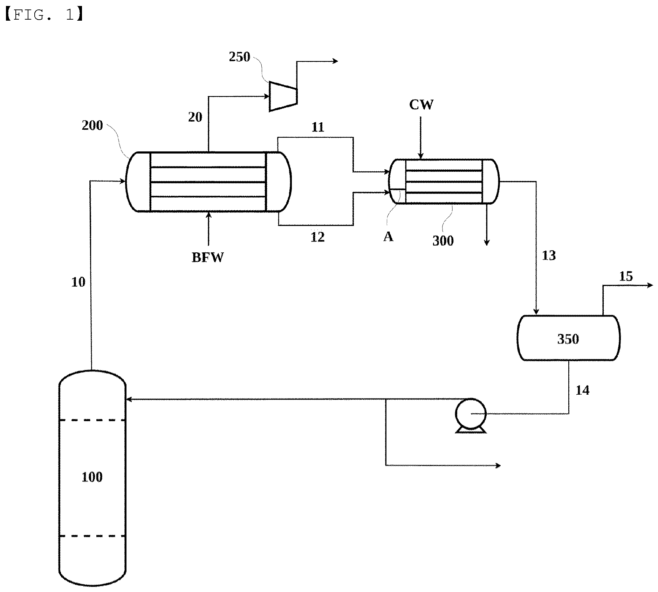

Referring to FIG. 1, a method for treating a process fluid according to the present disclosure may be performed using a system for treating a process fluid including a plurality of heat exchangers for the process fluid after waste heat recovery.

The method for treating a process fluid according to an embodiment of the present disclosure may include: supplying a gaseous process fluid stream 10 from waste heat to an evaporator 200, converting the process fluid stream 10 to a two-phase process fluid through heat exchange, and separating and discharging the two-phase process fluid stream into each of a gaseous first process fluid stream 11 and a liquid second process fluid stream 12 from the rear of the evaporator 200; supplying the gaseous first process fluid stream 11 to one region of a condenser 300 whose front-end head includes a partition A to divide its interior into two regions, and supplying the liquid second process fluid stream 12 to the other region of the condenser 300; and condensing the gaseous first process fluid stream and cooling the liquid second process fluid stream through the heat exchange by the condenser 300.

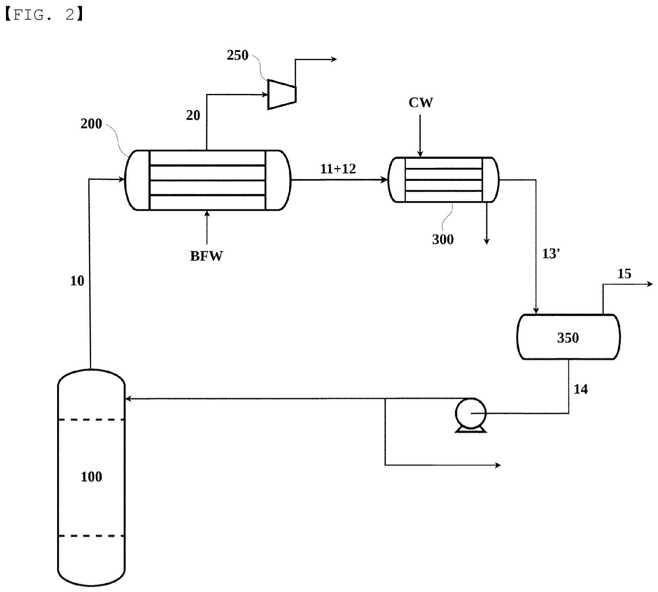

In general, in order to reuse the waste heat generated from a petrochemical process, as shown in FIG. 2, some of the waste heat in an upper discharge stream 10 of a column 100 may be recovered by installing the evaporator 200 at the front of the condenser, instead of directly condensing the upper discharge stream 10 of the column by the condenser 300. In this waste heat recovery system, boiler feed water BFW, which has a lower temperature than the upper discharge stream 10 of the column, may be input to the evaporator 200 to thus receive a heat source of the upper discharge stream 10 of the column. As a result, boiler feed water may be partially vaporized to generate steam 20, and the steam 20 generated from the evaporator 200 may finally generate steam of a desired pressure through a pressurization system 250.

However, in the system for treating a process fluid that includes a waste heat recovery process, in some cases, the waste heat of the upper discharge stream 10 of the column may not be recovered through the evaporator 200. For example, if a steam balance between the system for treating a process fluid (i.e., steam source) and an external system (i.e., steam use) according to the present disclosure is changed, a required amount of steam generation may be changed or the steam generation may be stopped. Here, supply of boiler feed water BFW to the evaporator may be stopped. In addition, if the steam generation is not possible due to a failure of the pressurization system 250, the supply of boiler feed water BFW may be temporarily stopped.

Meanwhile, in the process performed by the waste heat recovery system, the process fluid, from which the waste heat is recovered, may be supplied to the condenser 300 to thus be condensed, and then refluxed back to the column 100. Here, the condenser 300 or a condenser drum 350 may require to be controlled to the optimal temperature suitable for a process feature, and the temperature control may be controlled by a flow rate of cooling water CW input to the condenser. In addition, a temperature of the stream discharged from the condenser and an interior temperature of the condenser drum may be the same as each other. In more detail, when operated using the partial condenser, the system may emit the process fluid stream of the same vapor fraction by controlling the temperature regardless of a change in the stream flowing into the condenser. On the other hand, when operated using the full condenser, the system may encounter a problem with its process operation stability such as corrosion, precipitation, or polymerization if the system falls outside the optimal temperature range suitable for the process feature.

However, an operation range of the condenser 300 may be significantly changed based on whether the evaporator 200 is in operation. For example, assuming that a total amount of heat condensed in the upper discharge stream 10 of the column is 100%, the condenser 300 is required to respond to a wide range of the amount of heat between 20% and 100% as the same device for condensing the upper discharge stream 10 of the column if the operation of the evaporator 200 is stopped in a system where the evaporator 200 condenses about 30% to 80% of the amount of heat, and the condenser 300 condenses the remaining 20% to 70% of the amount of heat. As described above, the phase change and required amount of heat of the process fluid stream flowing into the condenser may be significantly changed based on whether the evaporator is in operation. However, as shown in FIG. 2, a problem may occur in thermal/mechanical stability of the condenser when a conventional condenser responds to a wide range of operation conditions despite this fact.

Therefore, the system for treating a process fluid that includes the waste heat recovery process requires the method and system for treating a process fluid that may be stably operated regardless of whether the evaporator is in operation. In more detail, the system requires the method and system that may stably operate the condenser even when the operation of the evaporator is stopped. Accordingly, the present disclosure attempts to provide the method and system for treating a process fluid to solve the problem described above.

The waste heat may be a high-temperature process fluid 10 generated in the column 100, where various processes such as reaction, separation, and purification are performed, when manufacturing a petrochemical product. A temperature of the high-temperature process fluid 10 may be changed based on a condition of each process, and may range approximately from 50°C to 250°C, specifically from 70°C to 200°C.

Meanwhile, treating the process fluid without separate heat recovery is undesirable from an energy point of view. Therefore, recovering heat of the waste heat, that is, the high-temperature process fluid, and using recovered heat in another process that requires heat is essential in reducing energy usage of an entire process.

To this end, first, the high-temperature process fluid stream 10 and boiler feed water BFW for the steam generation may be supplied to the evaporator 200. The process fluid stream 10 may perform the heat exchange with boiler feed water BFW in the evaporator 200, and heat of the process fluid may thus be transferred to boiler feed water BFW. In addition, boiler feed water BFW may be a feed for the steam generation for using the waste heat. In detail, boiler feed water vaporized by heat transferred from the process fluid in the evaporator 200 may be converted to the steam 20.

The steam 20 discharged from the evaporator 200 may be post-treated using the pressurization system 250 to be compressed to a high temperature and a high pressure, and the high-temperature and high-pressure steam may be used as an energy source for the various petrochemical processes. Here, the pressurization system 250 may be a mechanical vapor recompression (MVR) system including a device such as at least one stage compressor (CP) and/or blower, or may be a thermal vapor recompression (TVR) system including a device such as an ejector. The pressurization system 250 may be, for example, one assembly where two or more compressors are combined to each other, or a compression unit including one or more compressors, and is not limited thereto.

According to an embodiment of the present disclosure, water as boiler feed water BFW may be supplied to the evaporator 200 to thus generate the steam 20 through the heat exchange with the process fluid stream 10, thereby recovering the waste heat. The evaporator 200 may be a device connected to the column 100, through which the waste heat is discharged, and transferring the waste heat from the process fluid to boiler feed water to thus emit steam.

The evaporator 200 may be a type of heat exchanger commonly used in the petrochemical process. The heat exchanger applicable to the present disclosure may be a cylindrical shell and tube type, or may also use a plate type or a falling film evaporator type to increase heat exchange efficiency, and is not limited thereto.

In detail, the process fluid may have a different fluid feature such as its composition or temperature, and boiler feed water may thus have a different temperature or pressure condition. Liquid boiler feed water BFW, e.g., cooling water having a temperature of 40°C to 150°C, specifically 60°C to 120°C, may supplied to and circulated in the evaporator 200 under conditions of a pressure of 1 bar to 20 bar, specifically 2 bar to 10 bar, and a flow rate of 1 ton/hr to 10,000 ton/hr, specifically 10 ton/hr to 1,000 ton/hr. In addition, the high-temperature process fluid stream 10 supplied from the waste heat may flow into the evaporator 200, through which boiler feed water BFW flows, to thus evaporate boiler feed water BFW through the heat exchange.

In detail, an initial temperature of the process fluid stream 10 (i.e., temperature of the waste heat) flowing into the evaporator 200 may be 50°C to 250°C, specifically 70°C to 200°C. When the high-temperature gaseous process fluid stream 10, supplied from the waste heat, flows into the evaporator 200, boiler feed water BFW may absorb heat from the process fluid stream through the heat exchange to thus be vaporized. Here, in order to maintain a temperature difference between boiler feed water BFW and the process waste heat in an appropriate range while generating steam, the temperature difference between boiler feed water BFW and the waste heat may preferably be adjusted to 5°C to 30°C, specifically 5°C to 20°C.

The flow rate of the process fluid stream 10 flowing into the evaporator 200 is not particularly limited, and may be, for example, 1 ton/hr to 10,000 ton/hr, specifically 10 ton/hr to 5,000 ton/hr, and more specifically 20 ton/hr to 1,000 ton/hr. The process fluid whose heat exchange is performed with boiler feed water BFW in the evaporator 200 may flow out of the evaporator 200 at a temperature lower than the initial temperature, for example, in a range of 50°C to 200°C. Here, the process fluid, which is converted to the vapor-liquid two-phase as the temperature is lower due to the heat exchange, may be separated and discharged into each of the gaseous first process fluid stream 11 and the liquid second process fluid stream 12 at the top and bottom rear of the evaporator 200. Meanwhile, if the supply of boiler feed water to the evaporator 200 is stopped, only the gaseous first process fluid stream 11 may be discharged through the top rear of the evaporator 200. In addition, temperatures of the gaseous first process fluid stream 11 and the liquid second process fluid stream 12, which are discharged from the evaporator 200, may be the same as each other, and may be, for example, 50°C to 200°C, specifically 50°C to 180°C.

In general, the plurality of heat exchangers are in operation in a petrochemical plant in order to cool or condense the high-temperature process fluid generated from columns of various processes and simultaneously recover heat. Here, some or all of the heat-recovered process fluid may be condensed and then refluxed back into the column in order to be reused in the process. During the heat recovery process, a process stability risk may be increased based on the phase change condition of the process fluid flowing into the heat exchanger such as the condenser.

In detail, as shown in FIG. 2, a mixed vapor-liquid two-phase stream 11+12 may be input to the condenser 300 connected to the rear of the evaporator. In this case, process stability may be lower due to a problem such as mechanical damage occurring in the front-end head of the condenser, to which the process fluid stream is input, liquid accumulated on the front-end head of the condenser, or damage occurring in a tube sheet.

Accordingly, the method and system for treating a process fluid according to the present disclosure may connect the evaporator to the waste heat to thus evaporate boiler feed water through the high-temperature process fluid, thereby recovering heat, and separate and emit the process fluid, which is converted into the vapor-liquid two-phase due to the heat recovery, and input each fluid into the condenser whose front-end head has spaces individually separated from each other and treat the same. As a result, the method and system according to the present disclosure may secure excellent process stability by using only one condenser regardless of whether steam is generated.

The gaseous first process fluid stream 11 and the liquid second process fluid stream 12 separated and discharged from the evaporator 200 may each be independently supplied to the condenser 300.

According to an embodiment of the present disclosure, the partition A may be disposed at the front-end head of the condenser 300 to thus divide the interior into two regions. The vapor process fluid stream 11 may flow into one region of the front-end head, which is divided into two regions by the partition A, and the liquid process fluid stream 12 may flow into the other region of the front-end head.

In addition, when vapor and liquid are separated from each other in the two-phase stream, even if liquid has a mass fraction of about 70% or more, its volume fraction may be less than about 5%. Therefore, it may be preferable for the partition A to be disposed for one region (i.e., vapor region) into which the vapor stream flows to have a larger volume than the other region (i.e., liquid region) into which the liquid stream flows. For example, a volume ratio of the vapor region to the liquid region may be 2:1 to 20:1, specifically 3:1 to 10:1, and more specifically 5:1 to 10:1.

In detail, as shown in FIG. 1, the condenser 300 whose front-end head includes the partition A may be used for the gaseous first process fluid stream 11 to be input to one region in the front-end head of the condenser 300 and condensed through the heat exchange, and the liquid second process fluid stream 12 to be supplied to the other region in the front-end head of the condenser 300 and cooled through the heat exchange.

For example, in the respective divided regions where a first tube is disposed in the one region and a second tube is disposed in the other region, the condenser may perform the heat exchange between the gaseous first process fluid stream 11 supplied to the first tube and cooling water CW supplied to the shell, and perform the heat exchange between the liquid second process fluid stream 12 supplied to the second tube and cooling water CW.

As described above, the partition A may be disposed at the front-end head of the condenser 300. Accordingly, the space in the condenser, to which vapor and liquid are input, may be divided from each other, and the process fluid of the different phases may thus be input into the respective spaces, thus making a stable operation possible by using only one condenser without mixing vapor and liquid. In addition, condensation of the gas phase process fluid and cooling of the liquid phase process fluid may be performed simultaneously. Furthermore, the temperature control of the condenser drum 350, which is described below, may be performed more easily.

In addition, the temperature of the gaseous first process fluid stream 11 flowing into the condenser 300 whose front-end head includes the partition may be 50°C to 200°C, specifically 50°C to 180°C, and the temperature of the liquid second process fluid stream 12 may be 50°C to 200°C, specifically 50°C to 180°C. In addition, a temperature of a process fluid stream 13 discharged from the condenser 300 may be 20°C to 150°C, specifically 20°C to 100°C.

In addition, cooling water CW, for example, cooling water of 10°C to 50°C, specifically 20°C to 40°C, may be supplied to and circulated in the condenser 300 under conditions of the pressure of 1 bar to 20 bar, specifically 2 bar to 10 bar, and a flow rate of 1 ton/hr to 1,000,000 ton/hr, specifically 1 ton/hr to 100,000 ton/hr.

The condenser 300 disposed at the rear of the evaporator 200 may include a condenser commonly used in the petrochemical process. The condenser applicable to the present disclosure may be a cylindrical shell and tube type, or may also use a plate type or a falling film evaporator type to increase the heat exchange efficiency, and is not limited thereto.

Meanwhile, a mass flow rate ratio of the gaseous first process fluid stream 11 to the liquid phase second process fluid stream 12, separated and discharged from the rear of the evaporator may be, for example, 1:9 to 10:0, specifically 2:8 to 8:2, more specifically 3:7 to 6:4, and is not limited thereto. If an amount of waste heat recovered in the evaporator 200 is large, the mass flow rate ratio of the liquid stream supplied to the condenser 300 may also be increased. Accordingly, as the amount of steam generated through the waste heat recovery is increased, the change in the stream input to the condenser may be increased, which may further increase the operation stability risk of the condenser. However, such operation stability problem may be solved when introducing the condenser including the partition A according to the present disclosure.

In addition, referring to FIG. 1, the condenser 300 including the partition A may be used for the heat exchange of the first process fluid stream 11 and the heat exchange of the liquid second process fluid stream 12 to respectively be performed in the interior of the condenser 300, the condensed first process fluid stream and the cooled second process fluid stream to thus be combined to each other at the rear of the condenser, and the combined process fluid stream 13 to be supplied to the condenser drum 350 to thus collect the liquid process fluid.

An interior temperature of the condenser drum 350 may be changed based on the process feature, and for example, may be maintained at 20°C to 150°C, specifically 30°C to 100°C, more specifically 40°C to 80°C, and is not limited thereto. The interior of the condenser drum may be in a normal state, and its temperature may thus be the same at any location under the same operation condition.

In addition, the interior temperature of the condenser drum 350 may maintain a temperature deviation of 5°C or less, specifically 3°C or less, and more specifically 2°C or less. Here, the interior temperature deviation of the condenser drum may refer to an interior temperature difference of the condenser drum, which is changed based on whether steam is generated in the evaporator. A small temperature deviation in the condenser drum 350 may be maintained within the above temperature range, and the process may thus be operated under the optimal operation condition while maintaining the process stability. Furthermore, as the interior temperature deviation of the condenser drum is increased, a reflux ratio of the process fluid may be reduced, separation and purification efficiency and product purity in the column may be lower, and a change may occur in a mass fraction of vapor in the process fluid, which may affect a subsequent process.

Meanwhile, a lower discharge stream 14 of the condenser drum 350 may be refluxed into the column 100 or input into the subsequent process such as the reaction process or the purification process, and is not limited thereto. In detail, in order to reuse the process fluid, the liquid process fluid collected in the condenser drum 350 may be refluxed to the column 100 where the waste heat is generated. In addition, an upper discharge stream 15 of a condenser drum 350 may be input to the subsequent process such as the reaction process or the purification process, or may be discharged to the outside, and is not limited thereto.

The system for treating a process fluid according to the present disclosure may include the plurality of heat exchangers (i.e., evaporator and condenser).

In detail, the system for treating a process fluid according to an embodiment of the present disclosure may include the evaporator 200 that generates steam by using the gaseous process fluid stream 10 supplied from the waste heat as the heat source.

Boiler feed water BFW flowing into the evaporator 200 may be converted to the steam 20 through the heat exchange with the process fluid stream 10. Liquid boiler feed water BFW, for example, cooling water having the temperature of 40°C to 150°C, specifically 60°C to 120°C, may supplied to and circulated in the evaporator 200 under the conditions of the pressure of 1 bar to 20 bar, specifically 2 bar to 10 bar, and the flow rate of 1 ton/hr to 10,000 ton/hr, specifically 10 ton/hr to 1,000 ton/hr. Meanwhile, the evaporator 200 may receive the process fluid stream 10, for example, at a temperature range of 50°C to 250°C, specifically 40°C to 200°C to thus perform the heat exchange on the process fluid stream 10, and then separate and emit the stream 10 into the gaseous first process fluid stream 11 of 50°C to 200°C, specifically 50°C to 180°C, and the liquid second process fluid stream 12 of 50°C to 200°C, specifically 50°C to 180°C. Here, the temperatures of the gaseous first process fluid stream 11 and the liquid second process fluid stream 12 are the same as each other.

The system for treating a process fluid according to an embodiment of the present disclosure may include: a first line connected to the top rear of the evaporator and transporting the gaseous first process fluid stream 11 discharged from the evaporator; a second line connected to the bottom rear of the evaporator and transporting the liquid second process fluid stream 12 discharged from the evaporator; and the condenser 300 connected to the first and second lines and performing the heat exchange between the gaseous first process fluid stream 11 and the liquid second process fluid stream 12, which are supplied from the evaporator, and cooling water CW.

According to an embodiment of the present disclosure, as shown in FIG. 1, the partition A may be disposed at the front-end head of the condenser 300 to thus divide the interior into two regions. Here, one region in the front-end head of the condenser may be connected to the first line, thus enabling the gaseous first process fluid stream 11 supplied from the evaporator to be condensed through the heat exchange with cooling water CW, and the other region in the front-end head of the condenser may be connected to the second line, thus enabling the liquid second process fluid stream supplied from the evaporator to be cooled through the heat exchange with cooling water CW.

In addition, when vapor and liquid are separated from each other in the two-phase stream, even if liquid has the mass fraction of about 70% or more, its volume fraction may be less than about 5%. Therefore, it may be preferable for the partition A to be disposed for one region (i.e., vapor region) into which the vapor stream flows to have the larger volume than the other region (i.e., liquid region) into which the liquid stream flows. For example, the volume ratio of the vapor region to the liquid region may be 2:1 to 20:1, specifically 3:1 to 10:1, and more specifically 5:1 to 10:1.

The system for treating a process fluid according to an embodiment of the present disclosure may include the condenser drum 350 connected to the condenser, and collecting the heat-exchanged first and second process fluid streams 13.

An interior temperature of the condenser drum 350 may be changed based on the process, and for example, may be maintained at 20°C to 150°C, specifically 30°C to 100°C, and more specifically 40°C to 80°C. In addition, the interior temperature of the condenser drum 350 may maintain the temperature deviation of 5°C or less, specifically 3°C or less, and more specifically 2°C or less. The small temperature deviation in the condenser drum 350 may be maintained within the above temperature range, and the process may thus be operated under the optimal operation condition while maintaining the process stability.

In addition, the bottom of the condenser drum 350 may be connected to the column 100 where the waste heat is generated to thus reflux the liquid process fluid collected in the condenser drum into the lower discharge stream 14.

According to an embodiment of the present disclosure, the system according to the present disclosure may further include an additional device required for waste heat fluid treatment, such as a valve, a condenser, a reboiler, a pump, a separation device, a compressor, or a mixer, if necessary.

Hereinabove, the waste heat fluid processing method according to the present disclosure is described and shown in the drawings. However, the descriptions and drawings provided above describe and show only the core components for understanding the present disclosure. In addition to the processes and devices described and shown in the descriptions and drawings provided above, processes and devices not separately described or shown may be appropriately applied and used to perform the waste heat fluid processing method according to the present disclosure.

Hereinafter, the present disclosure is described in more detail through Examples. However, Examples described below are intended to describe the present disclosure in more detail, and the scope of the present disclosure is not limited to Examples below.

### [Example]

### (1) Example 1

### Example 1-1

As shown in FIG. 1, the waste heat recovery and the process fluid treatment are performed using the system where the column 100, the evaporator 200, the condenser 300, and the condenser drum 350 are connected to one another. In detail, the front-end head of the condenser 300 is divided into one region and the other region by the partition A to thus connect the top rear of the evaporator 200 to one region of the condenser 300, and connect the bottom rear of the evaporator 200 to the other region of the condenser 300.

First, as the heat source, the gaseous process fluid stream 10 (at 110°C and 1.5 bar) discharged from the top of the column 100 is supplied to the evaporator 200 at a flow rate of 150 ton/hr, and boiler feed water BFW at 90°C is supplied under a pressure condition of 5 bar to thus perform the heat exchange with the process fluid stream 10, thereby generating steam.

Some of the heat-exchanged process fluid stream 11 is discharged from the top rear of the evaporator 200 as vapor of 102°C and 1.45 bar, and supplied to the first tube in one region of the condenser 300; and the remainder 12 is discharged from the bottom rear of the evaporator 200 as liquid of 102°C and 1.45 bar, and supplied to the second tube in the other region of the condenser. Here, in the entire process fluid stream discharged from the evaporator, the gaseous process fluid stream 11 has a mass fraction of 0.2 (i.e., 20% by weight out of 100% by weight) and a volume fraction of 0.99 (i.e., 99% by volume out of 100% by volume).

Next, cooling water (at 32°C and 5 bar) is supplied to the shell of the condenser 300 at a flow rate of 500 ton/hr to thus respectively perform the heat exchange with the gaseous process fluid stream 11 supplied to the first tube and the liquid process fluid stream 12 supplied to the second tube. Accordingly, the gaseous process fluid stream is condensed, the liquid process fluid stream is cooled, and these streams merge at the rear of the condenser to thus be discharged at 70°C.

Next, the process fluid stream 13 at 70°C that is discharged from the condenser 300 is supplied to the condenser drum 350. Here, the interior of the condenser drum 350 is at 70°C and 1.3 bar, and the mass fraction of vapor in the entire process fluid collected in the interior of the condenser drum 350 is 0.05 (i.e., 5% by weight of vapor out of 100% by weight).

Next, the gaseous process fluid collected in the interior of the condenser drum 350 is discharged to the upper discharge stream 15 of the condenser drum and supplied as a feed for the subsequent reaction process, and the liquid process fluid is discharged to the lower discharge stream 14 of the condenser drum and refluxed into the column 100.

### Example 1-2

The same process is performed as Example 1-1 above. However, boiler feed water BFW is not supplied to the evaporator 200, thus generating no steam, and the process fluid is also discharged as 100% by weight vapor (at 110°C and 1.5 bar) from the evaporator 200, and supplied to the tube of the condenser 300. In addition, the heat exchange is performed by supplying cooling water (at 32°C and 5 bar) to the shell of the condenser 300 at a flow rate of 1,750 ton/hr, and the process fluid stream at 70°C is then supplied to the condenser drum 350. Here, the interior of the condenser drum 350 is at 70°C and 1.3 bar, and the mass fraction of vapor in the entire process fluid collected in the interior of the condenser drum 350 is 0.05 (i.e., 5% by weight of vapor out of 100% by weight).

Next, the gaseous process fluid collected in the interior of the condenser drum 350 is discharged to the upper discharge stream 15 of the condenser drum and supplied as the feed for the subsequent reaction process, and the liquid process fluid is discharged to the lower discharge stream 14 of the condenser drum and refluxed into the column 100.

### (2) Comparative Example 1

### Comparative Example 1-1

As shown in FIG. 2, the waste heat recovery and the process fluid treatment are performed using the system where the column 100, the evaporator 200, the condenser 300, and the condenser drum 350 are connected to one another. Here, the condenser uses the typical condenser whose front-end head includes no partition while having the same heat exchange capacity as the condenser used in Example 1.

First, as the heat source, the gaseous process fluid stream 10 (at 110°C and 1.5 bar) discharged from the top of the column 100 is supplied to the evaporator 200 at the flow rate of 150 ton/hr, and boiler feed water BFW at 90°C is supplied under the pressure condition of 3 bar to thus perform the heat exchange with the process fluid stream 10, thereby generating steam.

The heat exchanged process fluid stream 11+12 may flow out as a mixture of vapor and liquid (at 102°C and 1.45 bar) and its entire amount is supplied to the tube of the condenser 300 instead of being separated based on the phase. Here, in the entire process fluid stream flowing out of the evaporator, the gaseous process fluid stream has the mass fraction of 0.2 (i.e., 20% by weight out of 100% by weight) and the volume fraction of 0.99 (i.e., 99% by volume out of 100% by volume).

Next, cooling water (at 32°C and 5 bar) is supplied to the shell of the condenser 300 at the flow rate of 500 ton/hr to thus perform the heat exchange with the two-phase vapor-liquid process fluid stream 11+12 supplied to the tube. Accordingly, the process fluid stream is condensed and cooled to thus be discharged at 70°C.

Next, a process fluid stream 13' at 70°C that is discharged from the condenser 300 is supplied to the condenser drum 350. Here, the interior of the condenser drum 350 is at 70°C and 1.3 bar, and the mass fraction of vapor in the entire process fluid collected in the interior of the condenser drum 350 is 0.05 (i.e., 5% by weight of vapor out of 100% by weight).

Next, the gaseous process fluid collected in the interior of the condenser drum 350 is discharged to the upper discharge stream 15 of the condenser drum and supplied as the feed for the subsequent reaction process, and the liquid process fluid is discharged to the lower discharge stream 14 of the condenser drum and refluxed into the column 100.

### Comparative Example 1-2

The same process is performed as Comparative Example 1-1 above. However, boiler feed water BFW is not supplied to the evaporator 200, thus generating no steam, and the process fluid is also discharged as 100 wt% vapor (at 110°C and 1.5 bar) from the evaporator 200, and supplied to the tube of the condenser 300. In addition, the heat exchange is performed by supplying cooling water (at 32°C and 5 bar) to the condenser 300 at the flow rate of 1,750 ton/hr, and the process fluid stream at 70°C is then supplied to the condenser drum 350. Here, the interior of the condenser drum 350 is at 70°C and 1.3 bar, and the mass fraction of vapor in the entire process fluid collected in the interior of the condenser drum 350 is 0.05 (i.e., 5% by weight of vapor out of 100% by weight).

Next, the gaseous process fluid collected in the interior of the condenser drum 350 is discharged to the upper discharge stream 15 of the condenser drum and supplied as the feed for the subsequent reaction process, and the liquid process fluid is discharged to the lower discharge stream 14 of the condenser drum and refluxed into the column 100.

### (3) Comparative Example 2

### Comparative Example 2-1

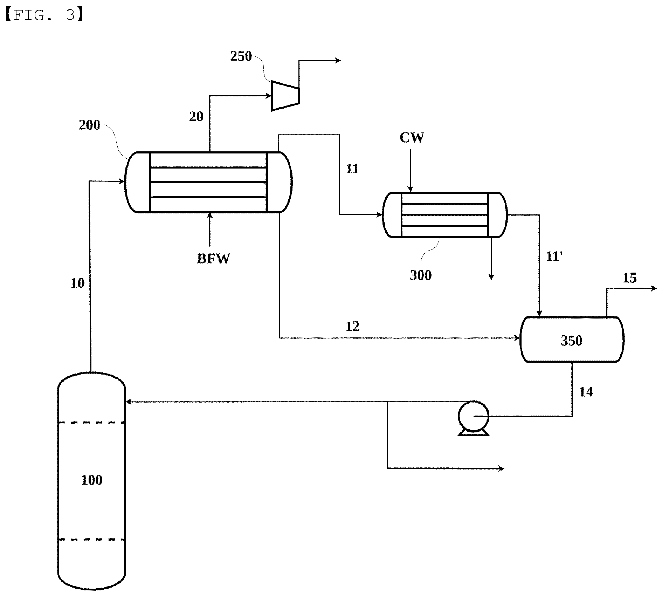

As shown in FIG. 3, the waste heat recovery and the process fluid treatment are performed using the system where the column 100, the evaporator 200, the condenser 300, and the condenser drum 350 are connected to one another. In detail, the top rear of the evaporator 200 is connected to the condenser 300, and the bottom rear of the evaporator 200 is connected to the condenser drum 350. Here, the condenser uses a typical condenser whose front-end head includes no partition while having the same heat exchange capacity as the condenser used in Example 1.

First, as the heat source, the gaseous process fluid stream 10 (at 110°C and 1.5 bar) discharged from the top of the column 100 is supplied to the evaporator 200 at the flow rate of 150 ton/hr, and boiler feed water BFW at 90°C is supplied under a pressure condition of 3 bar to thus perform the heat exchange with the process fluid stream 10, thereby generating steam.

Some of the heat-exchanged process fluid stream 11 flows out of the top rear of the evaporator 200 as vapor of 102°C and 1.45 bar, and is supplied to the tube of the condenser 300; and the remainder 12 flows out of the bottom rear of the evaporator 200 as liquid of 102°C and 1.45 bar, and supplied to the condenser drum 350. Here, in the entire process fluid stream flowing out of the evaporator, the gaseous process fluid stream 11 has the mass fraction of 0.2 (i.e., 20% by weight out of 100% by weight) and the volume fraction of 0.99 (i.e., 99% by volume out of 100% by volume).

Next, cooling water (at 32°C and 5 bar) is supplied to the shell of the condenser 300 at a flow rate of 420 ton/hr to thus perform the heat exchange with the gaseous process fluid stream 11 supplied to the tube. Accordingly, the process fluid stream is condensed and cooled to thus be discharged at 70°C.

Next, a process fluid stream 11' at 70°C that is discharged from the condenser 300 is supplied to the condenser drum 350. Here, the interior of the condenser drum 350 is 76°C and 1.3 bar, and the mass fraction of vapor in the entire process fluid collected in the interior of the condenser drum 350 is 0.13 (i.e., 13% by weight of vapor out of 100% by weight).

Next, the gaseous process fluid collected in the interior of the condenser drum 350 is discharged to the upper discharge stream 15 of the condenser drum and supplied as the feed for the subsequent reaction process, and the liquid process fluid is discharged to the lower discharge stream 14 of the condenser drum and refluxed into the column 100.

### Comparative Example 2-2

The same process is performed as Comparative Example 2-1 above. However, boiler feed water BFW is not supplied to the evaporator 200, thus generating no steam, and the process fluid is also discharged as 100 wt% vapor (at 110°C and 1.5 bar) from the evaporator 200, and supplied to the tube of the condenser 300. In addition, the heat exchange is performed by supplying cooling water (at 32°C and 5 bar) to the condenser 300 at the flow rate of 1,750 ton/hr, and the process fluid stream at 70°C is then supplied to the condenser drum 350. Here, the interior of the condenser drum 350 is at 70°C and 1.3 bar, and the mass fraction of vapor among the entire process fluid collected in the interior of the condenser drum 350 is 0.05 (i.e., 5% by weight of vapor out of 100% by weight).

Next, the gaseous process fluid collected in the interior of the condenser drum 350 is discharged to the upper discharge stream 15 of the condenser drum and supplied as the feed for the subsequent reaction process, and the liquid process fluid is discharged to the lower discharge stream 14 of the condenser drum and refluxed into the column 100.

### (4) Experimental Example

Table 1 below shows a phase of the process fluid stream discharged from the evaporator 200, the amount of heat used in the condenser 300 and the operation stability of the condenser 300, the interior temperature °C of the condenser drum 350, a mass fraction of vapor, and whether the temperature is controlled, based on whether steam is generated, in Example 1 and Comparative Examples 1 and 2.

In detail, heat usage rates of the condenser 300 are compared based on 100% of a heat usage amount of the condenser for the gaseous process fluid stream in the case where no steam is generated, that is, when boiler feed water is not supplied to the evaporator as in Example 1-2 and Comparative Examples 1-2 and 2-2. For example, in Table 1 below, the statement that the heat usage rate of the condenser is 30% indicates that the amount of heat used in the evaporator is 70% and the amount of heat used in the condenser is 30%.

In addition, the operation stability of the condenser is determined by calculating a "ρv²" value (here, ρ = density of the process fluid, and v = flow velocity of the process fluid) of the process fluid flowing into the condenser 300 based on whether steam is generated in each of Example and Comparative Examples. In detail, in the "ρv²" value, one of the variables that generally determine stability of the heat exchanger, the "maximum allowable value of ρv²" is determined based on a design of the heat exchanger, and the ρv² value may be calculated based on the property and operation condition of a fluid supplied to the condenser in each process. Accordingly, based on the maximum allowable value of ρv² of the condenser, "O" is entered by determining that the operation stability is excellent if the maximum ρv² value that is calculated in each process is within the maximum allowable value, and "X" is entered by determining that the operation stability of the condenser is poor if the maximum ρv² value exceeds the maximum allowable value.

Furthermore, regarding the temperature control of the condenser drum, "O" is entered by determining that the temperature control is successful if the interior temperature of the condenser drum has the temperature deviation of 5°C or less, and "X" is entered by determining that the temperature control fails if the interior temperature of the condenser drum has a temperature deviation exceeding 5°C, based on whether steam is generated.

**[Table 1]**

| Device type | Item | Example 1 (in FIG. 1) | | Comparative Example 1 (in FIG. 2) | | Comparative Example 2 (in FIG. 3) | |
|---|---|---|---|---|---|---|---|
| | | 1-1 | 1-2 | 1-1 | 1-2 | 2-1 | 2-2 |
| Evapor ator 200 | Steam generation | O | X | O | X | O | X |
| | Phase of discharge process fluid stream | gas/l iquid | gas | gas/li quid | gas | gas/l iquid | gas |
| Conden ser 300 | Heat usage rate | 30% | 100% | 30% | 100% | 30% | 100% |
| | Maximum ρv² | 249 | 2,952 | 50,837 | 2, 952 | 235 | 2, 952 |
| | Maximum allowable reference of ρv² | 5, 953 | 5, 953 | 5, 953 | 5, 953 | 5, 953 | 5, 953 |
| | Operation stability | O | O | X | O | O | O |
| Conden ser drum 350 | Interior temperator | 70°C | 70°C | 70°C | 70°C | 7 6°C | 70°C |
| | Mass fraction of vapor | 0.05 | 0.05 | 0.05 | 0.05 | 0.13 | 0.05 |
| | Temperature control | O | O | O | O | X | O |

As seen in Table 1 above, when treating the process fluid by using the method and system according to the present disclosure, it is possible to promote the operation stability of the condenser 300 regardless of whether steam is generated from the evaporator 200, and control the interior temperature of the condenser drum 350 to thus also control the mass fraction of vapor.

On the other hand, as shown in Comparative Example 1, the two-phase process fluid stream generated from the evaporator 200 may be simultaneously treated using the condenser without separation. In this case, a problem may occur in the operation stability of the condenser.

On the other hand, as shown in Comparative Example 2, only the gaseous process fluid stream 11 may be condensed although the two-phase process fluid stream generated from the evaporator 200 is separated and discharged. In this case, it is impossible to control the interior temperature of the condenser drum 350, which may increase the mass fraction of vapor. As a result, it may be seen that the stability of the subsequent process is lower because it is impossible to consistently supply the upper discharge stream 15 of the condenser drum in the subsequent process when the interior temperature of the condenser drum 350 is not controlled.

Although the embodiments of the present disclosure have been described hereinabove, the present disclosure is not limited thereto, and those skilled in the art will understand that various changes and modifications may be made without departing from the concept and scope of the following claims.

### [Description of symbols]

- 100:: column
- 200:: evaporator
- 250:: pressurization system
- 300:: condenser
- 350:: condenser drum
- 10, 11, 11', 12, 13, 13' 14, 15:: process fluid
- 20:: steam
- BFW:: boiler feed water
- CW:: cooling water

## Claims

1. A method for treating a process fluid, comprising:
supplying a gaseous process fluid stream from waste heat source to an evaporator, converting the gaseous process fluid stream to a two-phase process fluid stream through heat exchange, and separating and discharging the two-phase process fluid stream into each of a gaseous first process fluid stream and a liquid second process fluid stream from a rear of the evaporator;
supplying the gaseous first process fluid stream to one region of a condenser, the condenser having a front-end head including a partition to divide its interior into two regions, and supplying the liquid second process fluid stream to the other region of the condenser; and
condensing the gaseous first process fluid stream and cooling the liquid second process fluid stream through the heat exchange in the condenser.

2. The method of claim 1, comprising:
supplying water to the evaporator to generate steam through the heat exchange with the gaseous process fluid stream, thereby recovering the waste heat.

3. The method of claim 1,
wherein an initial temperature of the process fluid stream flowing into the evaporator ranges from 50°C to 250°C.

4. The method of claim 1, comprising:
collecting the process fluid by supplying the condensed first process fluid stream and the second process fluid stream in the condenser to a condenser drum.

5. The method of claim 4,
wherein an interior temperature of the condenser drum is maintained at a temperature deviation of 5°C or less.

6. The method of claim 4, comprising:
refluxing the process fluid collected in the condenser drum to the waste heat source.

7. The method of claim 1,
wherein a volume ratio of the one region to which the gaseous first process fluid stream is supplied and the other region to which the liquid second process fluid stream is supplied ranges from 2:1 to 20:1.

8. A system for treating a process fluid, comprising:
an evaporator that generates steam by using a gaseous process fluid stream supplied from waste heat source as a heat source;
a first line connected to a top rear of the evaporator and transporting a gaseous first process fluid stream discharged from the evaporator;
a second line connected to a bottom rear of the evaporator and transporting a liquid second process fluid stream discharged from the evaporator;
a condenser connected to the first and second lines and performing heat exchange between the gaseous first process fluid stream and the liquid second process fluid stream, which are supplied from the evaporator, and cooling water; and
a condenser drum connected to the condenser, and collecting the heat-exchanged first and second process fluid streams,
wherein a partition is disposed at a front-end head of the condenser to thus divide its interior into two regions,
wherien one region in the front-end head of the condenser is connected to the first line, enabling the gaseous first process fluid stream supplied from the evaporator to be condensed through the heat exchange, and
wherien the other region in the front-end head of the condenser is connected to the second line, enabling the liquid second process fluid stream supplied from the evaporator to be cooled through the heat exchange.

9. The system of claim 8,
wherein a boiler feed water stream flows into the evaporator and performs the heat exchange with the process fluid stream, thereby generating the steam.

10. The system of claim 8,
wherein an interior temperature of the condenser drum is maintained at a temperature deviation of 5°C or less.

11. The system of claim 8,
wherein the bottom of the condenser drum is connected to the waste heat to thus reflux the liquid process fluid collected in the condenser drum.

12. The system of claim 8,
wherein a volume ratio of one region in the front-end head of the condenser and the other region in the front-end head of the condenser ranges from 2:1 to 20:1.
